# FASCICULE DE BREVET EUROPEEN

(11) **EP 3 525 633 B1**
(45) Date de publication et mention de la délivrance du brevet: **21.04.2021**
(21) Numéro de dépôt: 17790801.9
(22) Date de dépôt: 09.10.2017
(51) Int. Cl.: A47J 27/62

(54) **DISPOSITIF ANTI-DÉBORDEMENT ACCOMPAGNANT UN APPAREIL DE CUISSON**
ÜBERLAUFSCHUTZVORRICHTUNG FÜR EIN KOCHGERÄT
ANTI-OVERFLOW DEVICE ACCOMPANYING A COOKING APPLIANCE

(30) Priorité: 13.10.2016 CN 201610893612
(43) Date de publication de la demande: 21.08.2019
(73) Titulaire: SEB S.A., 69130 Ecully (FR)
(72) Inventeur: MA, Chao, Hangzhou Zhejiang 310051 (CN); BOURGEOIS-JACQUET, Jean-Marie, 21800 Sennecey-les-Dijon (FR)
(74) Mandataire: SEB Développement
(86) Numéro de dépôt international: PCT/FR2017/052766
(87) Numéro de publication internationale: WO 2018/069622

(56) Documents cités:
- CN-U- 202 858 803
- CN-U- 204 698 315
- CN-Y- 2 370 792
- CN-Y- 201 079 286

## Description

### Domaine technique

La présente invention concerne le domaine des technologies anti-débordement, et plus particulièrement un dispositif anti-débordement accompagnant un appareil de cuisson.

### Etat de la technique

Afin d'éviter les risques de débordement des aliments au moment de l'ébullition, les appareils de cuisson existant actuellement (autocuiseurs, machines à lait de soja, robots cuiseur etc.) utilisent en général des méthodes d'anti-débordement. On distingue 3 méthodes suivantes :
1. Au moyen de 2 électrodes anti-débordement, dont l'une agencée sur un fond d'un récipient de cuisson et l'autre agencée sur un couvercle du récipient, les deux électrodes faisant saillie à l'intérieur du récipient de cuisson. Lorsque le liquide ou la mousse en ébullition montent jusqu'à atteindre l'électrode agencée sur le couvercle, un courant électrique passe entre les 2 électrodes et un élément chauffant de l'appareil s'éteint ou réduit considérablement sa puissance, évitant ainsi tout risque de débordement ;
2. Au moyen de 2 électrodes anti-débordement agencées sur un couvercle d'un récipient de cuisson et faisant saillie à l'intérieur du récipient. Lorsque le liquide ou la mousse en ébullition montent jusqu'à atteindre les 2 électrodes, un élément chauffant de l'appareil s'éteint ou réduit considérablement sa puissance, évitant ainsi tout risque de débordement ;
3. Au moyen d'une première électrode anti-débordement et d'un capteur de température agencés sur un couvercle d'un récipient de cuisson, une paroi métallique du capteur de température faisant office d'une deuxième électrode anti-débordement. La première électrode anti-débordement et le capteur de température font saillie à l'intérieur du récipient. Lorsque le liquide ou la mousse en ébullition montent jusqu'à atteindre la première électrode et le capteur de température, l'élément chauffant de l'appareil s'éteint ou réduit considérablement sa puissance, évitant ainsi tout risque de débordement ;

Parmi les méthodes d'anti-débordement décrites ci-dessus, la première nécessite une étanchéité excellente du fond du récipient afin d'éviter tout risque de fuite, les exigences étant donc élevées en termes de fabrication. Par ailleurs, l'électrode dépassant du fond du récipient nuit à l'esthétique globale de l'appareil et rend le nettoyage difficile. La deuxième et la troisième méthodes peuvent éviter cet inconvénient. Cependant, lorsqu'on emploie ces trois méthodes d'anti-débordement, il faut que le liquide ou la mousse dans le récipient arrivent à une certaine hauteur pour entrer en contact avec l'électrode afin de déclencher le dispositif anti-débordement. Cela présente un grand risque de retard et de débordement. En outre, le circuit constitué au moment du passage du courant d'une électrode à l'autre via la mousse est instable et manque de fiabilité.

Un autre dispositif anti-débordement est connu du document CN2370792Y.

### Exposé de l'invention

La présente invention concerne un dispositif anti-débordement accompagnant un appareil de cuisson, et vise à apporter une solution aux lacunes des dispositifs anti-débordement actuellement existants, qui se caractérisent par un manque de sensibilité, des retards de déclenchement et des risques de débordements. Afin d'atteindre cet objectif, un aspect de la présente invention concerne un dispositif anti-débordement qui comporte une première électrode et une deuxième électrode, espacées l'une de l'autre ; un isolant, une cavité agencée sur une surface extérieure de l'isolant, la première électrode étant installée à l'intérieur de l'isolant, et comportant une partie saillante dépassant d'une paroi de fond de la cavité, la distance entre une paroi latérale de la cavité et une surface extérieure de la partie saillante de la première électrode augmentant progressivement depuis la paroi de fond de la cavité dans une direction s'étendant vers une ouverture de la cavité.

Avantageusement, D1 est une distance entre une intersection de la paroi de fond et de la paroi latérale de la cavité et la surface extérieure de la partie saillante de la première électrode, et A1 est un angle formé par une ligne génératrice de la paroi latérale de la cavité et un axe de la première électrode, la distance étant supérieure ou égale à 0.1 mm et inférieure ou égale à 10 mm, l'angle A1 étant supérieur ou égal à 3° et inférieur ou égal à 80°.

Avantageusement, la distance D1 est supérieure ou égale à 0.7 mm et inférieure ou égale à 5 mm, et l'angle A1 est supérieur ou égal à 10° et inférieur ou égal à 60°.

Avantageusement, D2 est un diamètre de l'ouverture de la cavité, le diamètre D2 étant supérieur ou égal à 2 mm et inférieur ou égal à 25 mm.

Avantageusement, le diamètre D2 est supérieur ou égal à 4 mm et inférieur ou égal à 10 mm.

Avantageusement, la partie saillante de la première électrode dépassant de la paroi de fond dépasse de l'ouverture de la cavité.

Avantageusement, la deuxième électrode est agencée sur l'isolant, et comporte au moins une partie dénudée agencée sur la surface extérieure de l'isolant.

Avantageusement, la cavité se situe à une extrémité de l'isolant, et la deuxième électrode est agencée sur une paroi latérale cylindrique de l'isolant.

Avantageusement, l'extrémité de l'isolant comporte un évasement, la deuxième électrode se trouvant au-dessus de l'évasement et la cavité étant formée à l'intérieur de l'évasement, la distance entre une paroi latérale extérieure de l'évasement et la surface extérieure de la partie saillante de la première électrode augmentant progressivement depuis la paroi de fond de la cavité dans la direction s'étendant vers l'ouverture de la cavité.

Avantageusement, A2 est l'angle formé par une ligne génératrice de la paroi latérale extérieure de l'évasement et l'axe de la première électrode, l'angle A2 étant supérieur ou égal à 3° et inférieur ou égal à 80°.

Avantageusement, l'angle A2 est supérieur ou égal à 10° et inférieur ou égal à 60°.

Avantageusement, la deuxième électrode est une lame conductrice, la partie saillante de la première électrode dépassant de la paroi de fond constituant un premier élément actif anti-débordement, la partie dénudée de la deuxième électrode agencée sur la surface extérieure de l'isolant constituant un deuxième élément actif anti-débordement, D3 étant une distance entre une extrémité libre du premier élément actif anti-débordement et une extrémité basse du deuxième élément actif anti-débordement située au plus près de la cavité selon une direction longitudinale de la première électrode, la distance D3 étant supérieure ou égale à 0.5 mm et inférieure ou égale à 60 mm.

Avantageusement, la distance D3 est supérieure ou égale à 2 mm et inférieure ou égale à 30 mm.

Avantageusement, D4 est une distance entre l'extrémité libre du premier élément actif anti-débordement et une extrémité haute du deuxième élément actif anti-débordement située au plus loin de la cavité selon la direction longitudinale de la première électrode, la distance D4 étant supérieure ou égale à 1.5 mm et inférieure ou égale à 60 mm.

Avantageusement, la distance D4 est supérieure ou égale à 3 mm et inférieure ou égale à 30 mm.

Avantageusement, le dispositif anti-débordement comporte également une troisième électrode servant à détecter la température, la troisième électrode étant agencée sur la paroi latérale cylindrique de l'isolant, au-dessus de la deuxième électrode.

Avantageusement, D5 est une distance entre une extrémité basse d'une partie dénudée de la troisième électrode agencée sur la surface extérieure de l'isolant et l'extrémité basse de la partie dénudée de la deuxième électrode agencée sur la surface extérieure de l'isolant, la distance D5 étant supérieure ou égale à 1 mm et inférieure ou égale à 40 mm.

Avantageusement, la distance D5 est supérieure ou égale à 3 mm et inférieure ou égale à 15 mm.

Avantageusement, il existe plusieurs troisièmes électrodes, disposées dans une direction longitudinale de l'isolant et espacées les unes des autres, D6 étant la distance entre deux troisièmes électrodes adjacentes, la distance D6 étant supérieure ou égale à 1 mm et inférieure ou égale à 40 mm.

Avantageusement, la distance D6 est supérieure ou égale à 3 mm et inférieure ou égale à 25 mm.

Avantageusement, la deuxième électrode est espacée de l'isolant, D7 étant une distance entre la première électrode et la deuxième électrode, la distance D7 étant supérieure ou égale à 2 mm et inférieure ou égale à 150 mm.

Avantageusement, la distance D7 est supérieure ou égale à 5 mm et inférieure ou égale à 100 mm.

Un autre aspect de la présente invention concerne un appareil de cuisson comportant un corps principal recouvert par un couvercle et un dispositif anti-débordement tel que précédemment décrit, agencé sur un côté intérieur du couvercle.

Selon la solution technique proposée par la présente invention, la cavité est agencée sur la surface extérieure de l'isolant, la première électrode étant installée à l'intérieur de l'isolant, et comportant la partie saillante dépassant de la paroi de fond de la cavité, la distance entre la paroi latérale de la cavité et la surface extérieure de la partie saillante de la première électrode augmentant progressivement depuis la paroi de fond de la cavité dans la direction s'étendant vers l'ouverture de la cavité. Lorsque le liquide contenu dans l'appareil de cuisson commence à bouillir, une grande quantité de vapeur produite se condense dans la cavité et entraîne la mise en contact des 2 électrodes. Un circuit électrique est alors établi entre la première électrode, la deuxième électrode et le circuit imprimé de l'appareil de cuisson. Au fur et à mesure que le liquide se condense dans la cavité, l'amplitude de la résistance entre les 2 électrodes augmente ou change brutalement, entraînant également des changements de tension et d'intensité dans le circuit électrique. Un système de contrôle détecte ensuite des changements des signaux électriques internes au circuit et déclenche le dispositif anti-débordement en coupant l'élément chauffant de l'appareil, empêchant ainsi tout risque de débordement. Le système anti-débordement décrit ci-dessus est plus sensible et plus fiable, car il permet de détecter l'ébullition à un stade plus précoce et de couper l'élément chauffant avant que la surface du liquide en ébullition n'ait commencé à monter ou à produire une grande quantité de mousse. Le risque de débordement est ainsi considérablement réduit. De plus, le fait que le circuit électrique entre les 2 électrodes soit établi par la vapeur d'eau et le liquide condensé le rend plus stable que dans les appareils actuels, où le circuit est établi par la mousse.

### Brève description des dessins annexés

Les dessins annexés qui constituent une partie intégrante de la présente demande permettent une meilleure compréhension de la présente invention, les modes de réalisation schématiques de la présente invention et leurs explications étant destinés à expliquer la présente invention, sans pour autant constituer de restriction inappropriée de la présente invention. Dans les dessins annexés :
- La figure 1 est une vue structurelle selon un premier mode particulier de réalisation du dispositif anti-débordement objet de la présente invention.
- La figure 2 est une vue en coupe du dispositif anti-débordement de la figure 1 ;
- La figure 3 est une vue en coupe sous un autre angle du dispositif anti-débordement de la figure 1 ;
- La figure 4 est une vue indiquant des dimensions du dispositif anti-débordement de la figure 2 ;
- La figure 5 est une vue indiquant des angles du dispositif anti-débordement de la figure 2 ;
- La figure 6 est une vue structurelle selon un deuxième mode particulier de réalisation du dispositif anti-débordement objet de la présente invention ;
- La figure 7 est une vue structurelle selon un troisième mode particulier de réalisation du dispositif anti-débordement objet de la présente invention ;
- La figure 8 est une vue structurelle selon un mode de réalisation de l'appareil de cuisson objet de la présente invention.

Avec dans les dessins annexés ci-dessus, les numéros correspondant à : 10 : la première électrode ; 20 : la deuxième électrode ; 30 : l'isolant ; 31 : la cavité ; 32 : l'évasement ; 40 : la troisième électrode ; 50 : le corps principal : 51 : la cuve intérieure ; 60 : le couvercle ; 71 : le premier raccord conducteur ; 72 : le deuxième raccord conducteur.

### Description détaillée de modes de réalisation de l'invention

La partie qui va suivre décrit et explique en détail les techniques des modes particuliers de réalisation de la présente invention au moyen de schémas. Il convient de noter que la liste des modes de réalisation n'est pas exhaustive. Les modes particuliers de réalisation ne sont donnés qu'à titre illustratif et ne constituent en rien une limite aux possibilités de la présente invention.

Il faut noter que les termes techniques employés ici sont uniquement destinés à décrire des modes de réalisation concrets, et non à limiter les modes de réalisation fournis à titre d'exemples selon la présente demande. Sauf mention explicite du contraire, les termes techniques employés ici incluent également le pluriel lorsqu'ils sont au singulier ; de plus, il faut également comprendre que l'usage dans la présente description explicative des termes "comporter" et/ou "inclure" implique qu'il existe des caractéristiques, étapes, tâches, composants, pièces et/ou des éléments les constituant.

Enfin, pour des raisons de clarté, il convient de noter que les dimensions des pièces indiquées sur les illustrations ne correspondent pas aux proportions réelles.

Dans les exemples ici exposés et expliqués, tous les chiffres concrets sont à interpréter de manière illustrative et non pas de manière restrictive. Les chiffres peuvent donc être différents dans d'autres modes de réalisation à titre illustratif. Remarque importante : des signes et lettres similaires sont utilisés d'une illustration à l'autre, c'est pourquoi à partir du moment où ils ont été définis pour l'une des figures, ils ne font pas l'objet d'autres explications pour les figures suivantes.

Il convient de noter que dans la description de la présente invention, les emplacements et positions relatives indiqués par des termes du type "devant", "derrière", "sur", "sous", "gauche", "droite", "horizontal", "vertical", "perpendiculaire", "parallèle", "haut", "bas", sont basés sur les positions telles qu'indiquées sur les illustrations et ne sont donnés qu'à titre de description simplifiée. Sauf mention contraire, ces termes de position n'indiquent en aucun cas, ni explicitement ni implicitement, que les différentes pièces du dispositif doivent avoir telle ou telle position précisément définie les unes par rapport aux autres ; ces termes de position ne constituent donc en aucun cas une restriction au champ d'application de la présente invention ; les mots "intérieur" et "extérieur" font référence à l'intérieur et à l'extérieur de la silhouette de chaque pièce.

Afin de faciliter la démonstration, certaines indications spatiales de type "sur", "au-dessus de", "à la surface de", "du dessus" etc., ont été utilisées pour décrire les relations spatiales entre différents éléments ou caractéristiques représenté(e)s sur les illustrations. Il est important de comprendre que les indications spatiales peuvent signifier d'autres positions ou emplacements que ceux décrits sur les illustrations selon un mode d'utilisation ou de manipulation. Par exemple, si une pièce montrée sur une illustration est inversée, la pièce décrite à l'origine comme étant "sur" ou "au-dessus" d'une autre pièce ou structure sera ensuite décrite comme étant "sous" ou "en dessous" de cette pièce ou structure. Ainsi, une expression comme "au-dessus de" inclut à la fois le sens de "au-dessus de" et "en dessous de". Une pièce peut également être réorientée d'une autre manière (par exemple par rotation à 90°), auquel cas les indications spatiales doivent être interprétées en conséquence.

Par ailleurs, il convient de préciser que les mots comme "la première" "la deuxième" ne servent qu'à définir deux pièces correspondantes et à les distinguer l'une de l'autre, ils n'ont aucun contenu sémantique et ne restreignent en aucun cas le champ d'application de la présente invention.

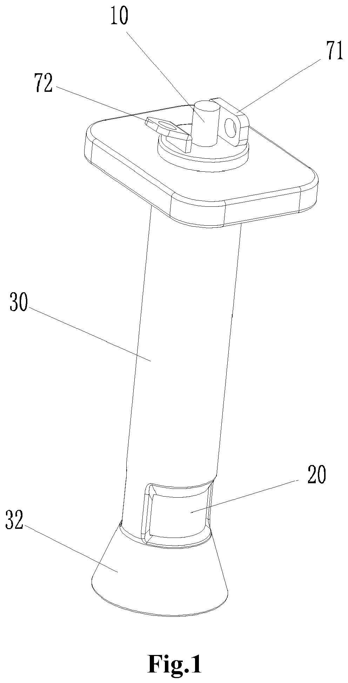

Tel qu'illustré aux figures 1 à 3, le dispositif anti-débordement du premier mode particulier de réalisation est installé dans un autocuiseur à riz. Le dispositif anti-débordement comporte une première électrode 10 et une deuxième électrode 20 espacées l'une de l'autre, ainsi qu'un isolant 30, une cavité 31 agencée sur une surface extérieure de l'isolant 30, la première électrode 10 étant installée à l'intérieur de l'isolant 30, et comportant une partie saillante dépassant d'une paroi de fond de la cavité 31, la distance entre une paroi latérale de la cavité 31 et une surface extérieure de la partie saillante de la première électrode 10 augmentant progressivement depuis la paroi de fond de la cavité 31 dans une direction s'étendant vers une ouverture de la cavité 31.

Selon le dispositif anti-débordement du premier mode particulier de réalisation, la cavité 31 est agencée sur la surface extérieure de l'isolant 30, la première électrode 10 étant installée à l'intérieur de l'isolant 30, et comportant la partie saillante dépassant de la paroi de fond de la cavité 31, la distance entre la paroi latérale de la cavité 31 et la surface extérieure de la partie saillante de la première électrode 10 augmentant progressivement depuis la paroi de fond de la cavité 31 dans la direction s'étendant vers l'ouverture de la cavité. Lorsque le liquide contenu dans l'autocuiseur à riz commence à bouillir, une grande quantité de vapeur produite se condense dans la cavité 31 et entraîne la mise en contact des 2 électrodes. Un circuit électrique est alors établi entre la première électrode 10, la deuxième électrode 20 et le circuit imprimé de l'autocuiseur à riz. Au fur et à mesure que le liquide se condense dans la cavité 31, l'amplitude de la résistance entre les 2 électrodes augmente ou change brutalement, entraînant également des changements de tension et d'intensité dans le circuit électrique. Un système de contrôle détecte ensuite des changements des signaux électriques internes au circuit et déclenche le dispositif anti-débordement en coupant l'élément chauffant de l'appareil de cuisson, empêchant ainsi tout risque de débordement. Le système anti-débordement décrit ci-dessus est plus sensible et plus fiable, car il permet de détecter l'ébullition à un stade plus précoce et de couper l'élément chauffant avant que la surface du liquide en ébullition n'ait commencé à monter ou à produire une grande quantité de mousse. Le risque de débordement est ainsi considérablement réduit. De plus, le fait que le circuit électrique entre les 2 électrodes 10, 20 soit établi par la vapeur d'eau et le liquide condensé le rend plus stable que dans les appareils actuels, où le circuit est établi par la mousse. Il convient de préciser que dans le présent mode de réalisation, le système de contrôle de l'autocuiseur à riz ne déclenche le dispositif anti-débordement que dans certaines conditions. Concrètement, le système de contrôle ne déclenche le dispositif anti-débordement en coupant l'élément chauffant de l'autocuiseur à riz que lorsque la résistance entre les deux électrodes 10 et 20 augmente jusqu'à un certain seuil.

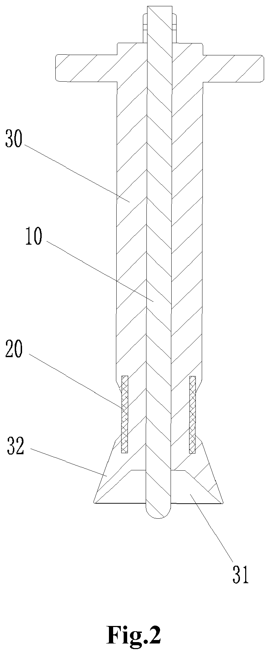

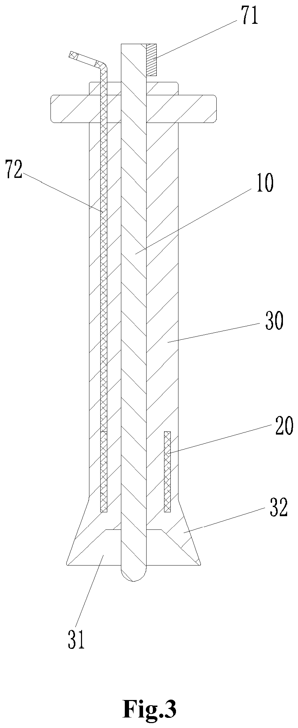

Tel qu'illustré aux figures 2 et 3, dans le dispositif anti-débordement du premier mode particulier de réalisation, la partie saillante de la première électrode 10 dépassant de la paroi de fond dépasse de l'ouverture de la cavité 31. Lorsque l'élément chauffant est coupé, le liquide condensé dans la cavité 31 continue d'adhérer à la cavité du fait de la tension superficielle. Si le liquide condensé ne retombe pas, l'amplitude de la résistance entre les électrodes 10 et 20 ne peut pas revenir à son état d'origine, ce qui aurait pour effet de perturber le fonctionnement du dispositif anti-débordement la fois suivante. Or, comme la partie saillante de la première électrode 10 dépassant de la paroi de fond de la cavité 31 est suffisamment longue, le liquide condensé peut couler le long de la partie saillante de la première électrode 10 pour ensuite retomber sous forme de gouttes. Le problème susmentionné est ainsi résolu.

Tel qu'illustrés aux figures 1 à 3, dans le dispositif anti-débordement du premier mode particulier de réalisation, la deuxième électrode 20 est agencée sur l'isolant 30, et comporte au moins une partie dénudée agencée sur la surface extérieure de l'isolant 30. Dans ce cas, les électrodes 10 et 20 sont toutes les deux installées sur l'isolant 30. En d'autres termes, le dispositif anti-débordement se présente comme une seule pièce. Un tel dispositif est à la fois pratique, compact et économe en nombre de pièces. Bien sûr, la disposition de la deuxième électrode 20 n'est pas limitée à ce mode de réalisation, la deuxième électrode peut aussi être installée ailleurs que sur l'isolant.

Tel qu'illustré aux figures 1 à 3, dans le dispositif anti-débordement du premier mode particulier de réalisation, la cavité 31 se situant à une extrémité de l'isolant 30, et la deuxième électrode 20 étant agencée sur une paroi latérale cylindrique de l'isolant 30. Dans le présent mode de réalisation, la première électrode 10 traverse l'isolant 30 de part en part dans une direction longitudinale de l'isolant 30, une extrémité basse de la première électrode 10 dépassant de la paroi de fond de la cavité 31, une extrémité haute de la première électrode 10 dépasse d'une extrémité haute de l'isolant 30. L'extrémité haute de la première électrode 10 est reliée à un premier raccord conducteur 71 qui comporte un premier trou de raccord. La deuxième électrode 20 est une pièce métallique circulaire incrustée à une partie basse de l'isolant 30. L'isolant 30 comporte deux ouvertures dans lesquelles une partie de la pièce métallique circulaire est dénudée. La deuxième électrode 20 est située à une certaine distance de la première électrode 10. À l'intérieur de l'isolant 30 est également installé un deuxième raccord conducteur 72, qui est agencé dans la direction longitudinale de l'isolant 30. Une première extrémité du deuxième raccord conducteur 72 est reliée à la deuxième électrode 20, tandis qu'une deuxième extrémité du deuxième raccord conducteur 72 dépasse de l'extrémité haute de l'isolant 30. La deuxième extrémité du deuxième raccord conducteur 72 comporte un deuxième trou de raccord. Lesdits premier et deuxième trous de raccord sont susceptibles d'être reliés au circuit imprimé de l'autocuiseur via un fil conducteur.

Il convient de préciser que la forme de l'isolant 30 et la structure de la deuxième électrode 20 ne sont pas limitées au présent mode de réalisation. Dans d'autres modes de réalisation non illustrés, l'isolant peut avoir une autre forme que celle indiquée sur les figures, et la deuxième électrode peut être une pièce métallique d'une autre forme, ou d'un autre type de conducteur de matériau différent. De plus, le mode de connexion des électrodes 10 et 20 au circuit imprimé n'est pas limité non plus au présent mode de réalisation, dans d'autres modes de réalisation non illustrés, les première et deuxième électrodes 10 et 20 peuvent être directement reliées au circuit imprimé via des fils conducteurs. Par ailleurs, dans le présent mode de réalisation, la première électrode 10 est une tige métallique pleine. Mais la structure de la première électrode 10 n'est pas limitée au présent mode de réalisation. Dans d'autres modes de réalisation, la structure de la première électrode peut être une tige creuse et comporter une thermistance intégrée, auquel cas la première électrode servant à constituer un élément de détection de température.

Tel qu'illustré à la figure 3, dans le dispositif anti-débordement du premier mode particulier de réalisation, l'extrémité de l'isolant 30 comporte un évasement 32, la deuxième électrode 20 se trouvant au-dessus de l'évasement 32 et la cavité 31 étant formée à l'intérieur de l'évasement 32, la distance entre une paroi latérale extérieure de l'évasement 32 et la surface extérieure de la partie saillante de la première électrode 10 augmentant progressivement depuis la paroi de fond de la cavité 31 dans la direction s'étendant vers l'ouverture de la cavité 31 (Autrement dit, l'extrémité de l'isolant a une forme de cloche). Dans le présent mode de réalisation, l'évasement 32 et la cavité 31 ont une structure symétrique, la première électrode 10 étant agencée le long d'un axe central de l'isolant 30, une ligne génératrice de la paroi latérale extérieure de l'évasement 32 et une ligne génératrice de la paroi latérale de la cavité 31 sont des lignes droites, facilitant ainsi la fabrication.

Il convient de préciser que la forme et la structure de l'évasement 32, de la cavité 31 et de la première électrode 10 ne sont pas limitées au présent mode de réalisation. Dans d'autres modes de réalisation non illustrés, l'évasement et la cavité peuvent avoir une structure asymétrique, la première électrode pouvant être écartée de l'axe central de l'isolant, les lignes génératrices de la paroi latérale extérieure de l'évasement et de la paroi latérale de la cavité pouvant être curvilignes, et la paroi latérale extérieure de l'évasement et la paroi latérale de la cavité pouvant être des surfaces irrégulières. Cependant, les proportions dimensionnelles indiquées de l'évasement 32, de la cavité 31 et de la première électrode 10 permettent une condensation de liquide suffisante pour le déclenchement du dispositif anti-débordement.

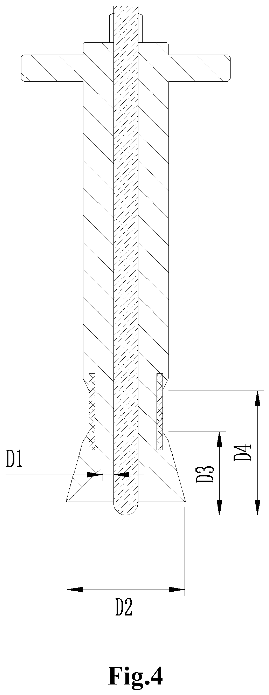

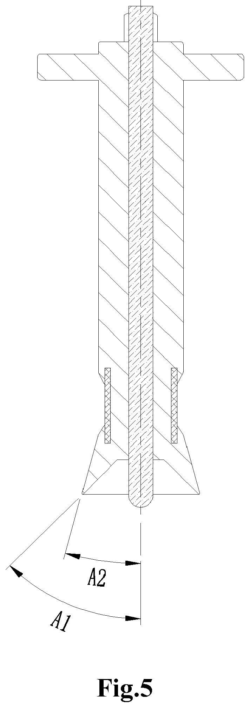

Tel qu'illustrés aux figures 2 à 5, dans le dispositif anti-débordement du premier mode particulier de réalisation, D1 est une distance entre une intersection de la paroi de fond et de la paroi latérale de la cavité 31 et la surface extérieure de la partie saillante de la première électrode 10, et A1 est un angle formé par la ligne génératrice de la paroi latérale de la cavité 31 et un axe de la première électrode 10, la distance D1 étant supérieure ou égale à 0.1 mm et inférieure ou égale à 10 mm, l'angle A1 étant supérieur ou égal à 3° et inférieur ou égal à 80°, et préférentiellement D1 étant supérieure ou égale à 0.7 mm et inférieure ou égale à 5 mm, et l'angle A1 étant supérieur ou égal à 10° et inférieur ou égal à 60°. Les dimensions de D1 et A1 peuvent déterminer le volume de la cavité 31 entourant la partie saillante de la première électrode 10. Si D1 et A1 sont trop grands, le liquide ne peut pas se condenser à temps en quantité suffisante dans la cavité 31, et par conséquent la résistance électrique ne varie pas suffisamment et le contrôleur ne reçoit pas les signaux électriques pouvant entraîner un déclenchement du dispositif. À l'inverse, si D1 et A1 sont trop petits, une fois l'élément chauffant désactivé, le liquide condensé dans la cavité 31 aura tendance à ne pas retomber du fait de la tension superficielle et par conséquent, la résistance électrique entre les première et deuxième électrodes 10 et 20 ne retournera pas à son état d'origine, et le fonctionnement du dispositif anti-débordement s'en trouvera perturbé la fois suivante.

Tel qu'illustré aux figures 2 à 5, dans le dispositif anti-débordement du premier mode particulier de réalisation, D2 est un diamètre de l'ouverture de la cavité 31, le diamètre D2 étant supérieur ou égal à 2 mm et inférieur ou égal à 25 mm, et préférentiellement le diamètre D2 étant supérieur ou égal à 4 mm et inférieur ou égal à 10 mm. D2, D1 et A1 déterminent ensemble le volume de la cavité 31. Si D2 est trop grand, le liquide condensé dans la cavité 31 retombe, et par conséquent la résistance électrique ne varie pas en temps utile. À l'inverse, si D2 est trop petit, une fois l'élément chauffant désactivé, le liquide condensé dans la cavité 31 aura tendance à ne pas retomber du fait de la tension superficielle et par conséquent, la résistance électrique entre les première et deuxième électrodes 10 et 20 ne retournera pas à son niveau d'origine, et le fonctionnement du dispositif anti-débordement s'en trouvera perturbé la fois suivante.

Tel qu'illustré aux figures 2 à 5, dans le dispositif anti-débordement du premier mode particulier de réalisation, A2 est l'angle formé par la ligne génératrice de la paroi latérale extérieure de l'évasement 32 et l'axe de la première électrode 10, l'angle A2 étant supérieur ou égal à 3° et inférieur ou égal à 80° et préférentiellement l'angle A2 étant supérieur ou égal à 10° et inférieur ou égal à 60°. A2 détermine l'angle d'écartement de la paroi latérale extérieure de l'évasement 32. Si A2 est trop petit, la cavité 31 à l'intérieur de l'évasement 32 n'aura pas la forme requise. À l'inverse, si A2 est trop grand, l'évasement constituera un obstacle entre les première et deuxième électrodes 10 et 20, rendant difficile le passage du courant entre les première et deuxième électrodes 10 et 20.

Tel qu'illustré aux figures 2 à 5, dans le dispositif anti-débordement du premier mode particulier de réalisation, la partie saillante de la première électrode 10 dépassant de la paroi de fond constitue un premier élément actif anti-débordement, la partie dénudée de la deuxième électrode 20 agencée sur la surface extérieure de l'isolant 30 constituant un deuxième élément actif anti-débordement, D3 étant une distance entre une extrémité libre du premier élément actif anti-débordement et une extrémité basse du deuxième élément actif anti-débordement située au plus près de la cavité 31 selon une direction longitudinale de la première électrode 10, la distance D3 étant supérieure ou égale à 0.5 mm et inférieure ou égale à 60 mm et préférentiellement la distance D3 étant supérieure ou égale à 2 mm et inférieure ou égale à 30 mm. Si D3 est trop grande, le 1er élément actif anti-débordement et le deuxième élément actif anti-débordement seront trop loin l'un de l'autre, rendant difficile le passage du courant entre les première et deuxième électrodes 10 et 20. À l'inverse, si D3 est trop petite, les premier et deuxième éléments actif anti-débordement seront trop près l'un de l'autre et risquent d'être directement en contact.

Tel qu'illustré aux figures 2 à 5, dans le dispositif anti-débordement du premier mode particulier de réalisation, D4 est une distance entre l'extrémité libre du premier élément actif anti-débordement et une extrémité haute du deuxième élément actif anti-débordement située au plus loin de la cavité 31 selon la direction longitudinale de la première électrode 10, la distance D4 étant supérieure ou égale à 1.5 mm et inférieure ou égale à 60 mm et préférentiellement la distance D4 étant supérieure ou égale à 3 mm et inférieure ou égale à 30 mm. D4 et D3 déterminent ensemble la hauteur du deuxième élément actif anti-débordement. Si le deuxième élément actif anti-débordement est trop haut, la vapeur perlera facilement à son contact et les gouttes couleront le long du deuxième élément actif anti-débordement, influençant la précision de la résistance entre les première et deuxième électrodes 10 et 20. À l'inverse, si le deuxième élément actif anti-débordement est trop bas, cela influencera la stabilité du passage du courant entre les première et deuxième électrodes 10 et 20.

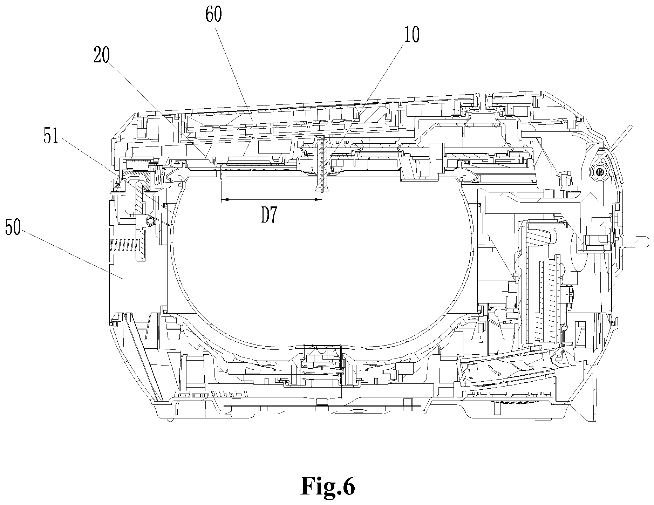

Tel qu'illustré à la figure 6, la principale différence entre le deuxième mode particulier de réalisation et le premier mode particulier de réalisation est que dans le deuxième mode particulier de réalisation, la deuxième électrode 20 est espacée de l'isolant 30. En d'autres termes, le dispositif anti-débordement se présente en plusieurs pièces. La deuxième électrode 20 peut être une pièce métallique intégrée à un couvercle ou à un capteur de température intégré à l'autocuiseur. D7 est une distance entre la première électrode 10 et la deuxième électrode 20, la distance D7 étant supérieure ou égale à 2 mm et inférieure ou égale à 150 mm, et préférentiellement la distance D7 étant supérieure ou égale à 5 mm et inférieure ou égale à 100 mm. Si D7 est trop grande, les électrodes 10 et 20 seront trop loin l'une de l'autre, ce qui rendra difficile le passage du courant entre les première et deuxième électrodes 10 et 20. À l'inverse, si D7 est trop petite, les électrodes 10 et 20 seront trop proches l'une de l'autre, et risquent d'être directement en contact. La structure et le principe de fonctionnement de l'isolant 30 et de la première électrode 10 sont identiques à ceux du premier mode particulier de réalisation, ils ne seront pas abordés ici plus en détail.

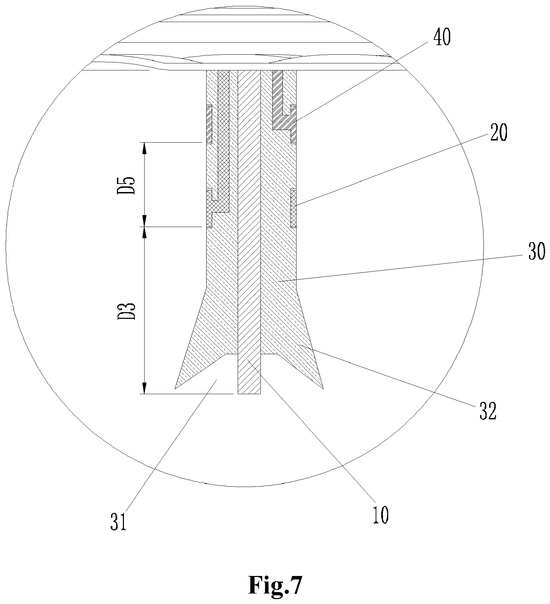

Tel que visible à la figure 7, la différence principale entre le troisième mode particulier de réalisation et le premier mode particulier de réalisation est que dans le troisième mode particulier de réalisation, le dispositif anti-débordement comporte également une troisième électrode 40 servant à détecter la température, la troisième électrode 40 étant agencée sur la paroi latérale cylindrique de l'isolant 30, au-dessus de la deuxième électrode 20. Dans le présent mode de réalisation, la troisième électrode 40 présente une forme annulaire, et comporte un troisième raccord conducteur. La troisième électrode 40 contient une thermistance intégrée permettant de capter la température de la vapeur.

Tel que visible à la figure 7, dans le dispositif anti-débordement du troisième mode particulier de réalisation, D5 est une distance entre la deuxième électrode 20 et la troisième électrode 40, la distance D5 étant supérieure ou égale à 1 mm et inférieure ou égale à 40 mm, et préférentiellement la distance D5 étant supérieure ou égale à 3 mm et inférieure ou égale à 15 mm. Dans le présent mode de réalisation, D5 est une distance entre une extrémité basse d'une partie dénudée de la troisième électrode 40 agencée sur la surface extérieure de l'isolant 30 et l'extrémité basse de la partie dénudée de la deuxième électrode 20 agencée sur la surface extérieure de l'isolant 30. La troisième électrode 40 et la deuxième électrode 20 ne risquent pas d'influencer réciproquement leur fonctionnement si elles sont suffisamment distantes l'une de l'autre.

Dans le dispositif anti-débordement du troisième mode particulier de réalisation, il existe plusieurs troisièmes électrodes 40, disposées dans la direction longitudinale de l'isolant 30 et espacées les unes des autres, D6 étant la distance entre deux troisièmes électrodes 40 adjacentes, la distance D6 étant supérieure ou égale à 1 mm et inférieure ou égale à 40 mm, et préférentiellement la distance D6 étant supérieure ou égale à 3 mm et inférieure ou égale à 25 mm.

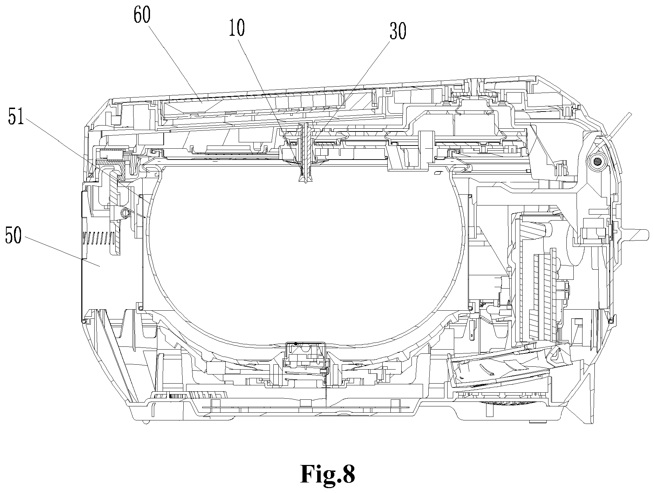

Tel que visible à la figure 8, la présente demande propose également un appareil de cuisson, dont un mode de réalisation de l'appareil de cuisson comporte un corps principal 50 recouvert par un couvercle 60 et un dispositif anti-débordement agencé sur un côté intérieur du couvercle 60. Le dispositif anti-débordement est conforme au premier mode particulier de réalisation. Dans le présent mode de réalisation, l'appareil de cuisson est un autocuiseur à riz dont le corps principal 50 comprend une cuve intérieure 51. Quand le couvercle 60 est fermé, le dispositif anti-débordement fait saillie à l'intérieur de la cuve intérieure 51. Certes, l'appareil de cuisson n'est pas limité à un autocuiseur à riz. L'appareil de cuisson peut être un robot cuiseur, une machine à lait de soja etc.

Les modes de réalisation mentionnés plus haut constituent uniquement des exemples d'application préférables de la présente invention et ils ne constituent en rien une restriction à la présente invention.

## Revendications

1. Dispositif anti-débordement, comportant:
une première électrode (10) et une deuxième électrode (20), espacées l'une de l'autre ;
un isolant (30), une cavité (31) agencée sur une surface extérieure de l'isolant (30), la première électrode (10) étant installée à l'intérieur de l'isolant (30), et comportant une partie saillante dépassant d'une paroi de fond de la cavité (31), **caractérisé en ce que** :
la distance entre une paroi latérale de la cavité (31) et une surface extérieure de la partie saillante de la première électrode (10) augmente
progressivement depuis la paroi de fond de la cavité (31) dans une direction s'étendant vers une ouverture de la cavité (31).

2. Dispositif anti-débordement selon la revendication 1, **caractérisé en ce que** D1 est une distance entre une intersection entre la paroi de fond et la paroi latérale de la cavité (31) et la surface extérieure de la partie saillante de la première électrode (10), et A1 est un angle formé par une ligne génératrice de la paroi latérale de la cavité (31) et un axe de la première électrode (10), la distance D1 étant supérieure ou égale à 0.1 mm et inférieure ou égale à 10 mm, de préférence supérieure ou égale à 0.7 mm et inférieure ou égale à 5 mm, l'angle A1 étant supérieur ou égal à 3° et inférieur ou égal à 80°, de préférence supérieur ou égal à 10° et inférieur ou égal à 60°.

3. Dispositif anti-débordement selon la revendication 2, **caractérisé en ce que** D2 est un diamètre de l'ouverture de la cavité (31), le diamètre D2 étant supérieur ou égal à 2 mm et inférieur ou égal à 25 mm, de préférence supérieur ou égal à 4 mm et inférieur ou égal à 10 mm.

4. Dispositif anti-débordement selon la revendication 1, **caractérisé en ce que** la partie saillante de la première électrode (10) dépassant de la paroi de fond dépasse de l'ouverture de la cavité (31).

5. Dispositif anti-débordement selon une quelconque des revendications 1 à 4, **caractérisé en ce que** la deuxième électrode (20) est agencée sur l'isolant (30), et comporte au moins une partie dénudée agencée sur la surface extérieure de l'isolant (30).

6. Dispositif anti-débordement selon la revendication 5, **caractérisé en ce que** la cavité (31) se situe à une extrémité de l'isolant (30), et la deuxième électrode (20) est agencée sur une paroi latérale cylindrique de l'isolant (30).

7. Dispositif anti-débordement selon la revendication 6, **caractérisé en ce que** l'extrémité de l'isolant (30) comporte un évasement (32), la deuxième électrode (20) se trouvant au-dessus de l'évasement (32) et la cavité (31) étant formé à l'intérieur de l'évasement (32), la distance entre une paroi latérale extérieure de l'évasement (32) et la surface extérieure de la partie saillante de la première électrode (10) augmentant progressivement depuis la paroi de fond de la cavité (31) dans la direction s'étendant vers l'ouverture de la cavité (31).

8. Dispositif anti-débordement selon la revendication 7, **caractérisé en ce que** A2 est l'angle formé par une ligne génératrice de la paroi latérale extérieure de l'évasement (32) et l'axe de la première électrode (10), l'angle A2 étant supérieur ou égal à 3° et inférieur ou égal à 80°, de préférence supérieur ou égal à 10° et inférieur ou égal à 60°.

9. Dispositif anti-débordement selon la revendication 6, **caractérisé en ce que** la deuxième électrode (20) est une lame conductrice, la partie saillante de la première électrode (10) dépassant de la paroi de fond constituant un premier élément actif anti-débordement, la partie dénudée de la deuxième électrode (20) agencée sur la surface extérieure de l'isolant (30) constituant un deuxième élément actif anti-débordement, D3 étant une distance entre une extrémité libre du premier élément actif anti-débordement et une extrémité basse du deuxième élément actif anti-débordement située au plus près de la cavité (31) selon une direction longitudinale de la première électrode (10), la distance D3 étant supérieure ou égale à 0.5 mm et inférieure ou égale à 60 mm, de préférence supérieure ou égale à 2 mm et inférieure ou égale à 30 mm.

10. Dispositif anti-débordement selon la revendication 9, **caractérisé en ce que** D4 est une distance entre l'extrémité libre du premier élément actif anti-débordement et une extrémité haute du deuxième élément actif anti-débordement située au plus loin de la cavité (31) selon la direction longitudinale de la première électrode (10), la distance D4 étant supérieure ou égale à 1.5 mm et inférieure ou égale à 60 mm, de préférence supérieure ou égale à 3 mm et inférieure ou égale à 30 mm.

11. Dispositif anti-débordement selon la revendication 6, **caractérisé en ce qu'**il comporte également une troisième électrode (40) servant à détecter la température, la troisième électrode (40) étant agencée sur la paroi latérale cylindrique de l'isolant (30), au-dessus de la deuxième électrode (20).

12. Dispositif anti-débordement selon la revendication 11, **caractérisé en ce que** D5 est une distance entre une extrémité basse d'une partie dénudée de la troisième électrode (40) agencée sur la surface extérieure de l'isolant (30) et l'extrémité basse de la partie dénudée de la deuxième électrode (20) agencée sur la surface extérieure de l'isolant (30), la distance D5 étant supérieure ou égale à 1 mm et inférieure ou égale à 40 mm, de préférence supérieure ou égale à 3 mm et inférieure ou égale à 15 mm.

13. Dispositif anti-débordement selon la revendication 12, **caractérisé en ce qu'**il existe plusieurs troisièmes électrodes (40), disposées dans une direction longitudinale de l'isolant (30) et espacées les unes des autres, D6 étant la distance entre deux troisièmes électrodes (40) adjacentes, la distance D6 étant supérieure ou égale à 1 mm et inférieure ou égale à 40 mm, de préférence supérieure ou égale à 3 mm et inférieure ou égale à 25 mm.

14. Dispositif anti-débordement, selon l'une quelconque des revendications 1 à 4, **caractérisé en ce que** la deuxième électrode (20) est espacée de l'isolant (30), D7 étant la distance entre la première électrode (10) et la deuxième électrode (20), la distance D7 étant supérieure ou égale à 2 mm et inférieure ou égale à 150 mm, de préférence supérieure ou égale à 5 mm et inférieure ou égale à 100 mm.

15. Appareil de cuisson comportant un corps principal (50) recouvert par un couvercle (60) et un dispositif anti-débordement agencé sur un côté intérieur du couvercle (60), **caractérisé en ce que** le dispositif anti-débordement est conforme à l'une quelconque des revendications 1 à 14.

## Patentansprüche

1. Überlaufschutzvorrichtung mit:
einer ersten Elektrode (10) und einer zweiten Elektrode (20), die voneinander beabstandet sind;
einem Isolator (30), einem Hohlraum (31), der an einer Außenfläche des Isolators (30) angeordnet ist, wobei die erste Elektrode (10) innerhalb des Isolators (30) installiert ist und einen vorstehenden Teil aufweist, der von einer Bodenwand des Hohlraums (31) vorsteht, **dadurch gekennzeichnet, dass**:
der Abstand zwischen einer Seitenwand des Hohlraums (31) und einer Außenfläche des vorstehenden Teils der ersten Elektrode (10) allmählich von der Bodenwand des Hohlraums (31) in einer Richtung zunimmt, die sich zu einer Öffnung des Hohlraums (31) erstreckt.

2. Überlaufschutzvorrichtung nach Anspruch 1, **dadurch gekennzeichnet, dass** D1 ein Abstand zwischen einem Schnittpunkt zwischen der Bodenwand und der Seitenwand des Hohlraums (31) und der Außenfläche des vorstehenden Teils der ersten Elektrode (10) ist, und A1 ein Winkel ist, der von einer Erzeugenden der Seitenwand des Hohlraums (31) und einer Achse der ersten Elektrode (10) gebildet wird, wobei der Abstand D1 größer als oder gleich 0,1mm und kleiner als oder gleich 10 mm ist, bevorzugt größer als oder gleich 0,7 mm und kleiner als oder gleich 5 mm, wobei der Winkel A1 größer als oder gleich 3° und kleiner als oder gleich 80°, bevorzugt größer als oder gleich 10° und kleiner als oder gleich 60° ist.

3. Überlaufschutzvorrichtung nach Anspruch 2, **dadurch gekennzeichnet, dass** D2 ein Durchmesser der Öffnung des Hohlraums (31) ist, wobei der Durchmesser D2 größer als oder gleich 2 mm und kleiner als oder gleich 25 mm, bevorzugt größer als oder gleich 4 mm und kleiner als oder gleich 10 mm ist.

4. Überlaufschutzvorrichtung nach Anspruch 1, **dadurch gekennzeichnet, dass** der vorstehende Teil der ersten Elektrode (10), der aus der Bodenwand herausragt, aus der Hohlraumöffnung (31) herausragt.

5. Überlaufschutzvorrichtung nach einem der Ansprüche 1 bis 4, **dadurch gekennzeichnet, dass** die zweite Elektrode (20) auf dem Isolator (30) angeordnet ist und mindestens einen an der Außenfläche des Isolators (30) angeordneten freiliegenden Teil aufweist.

6. Überlaufschutzvorrichtung nach Anspruch 5, **dadurch gekennzeichnet, dass** der Hohlraum (31) an einem Ende des Isolators (30) angeordnet ist und die zweite Elektrode (20) an einer zylindrischen Seitenwand des Isolators (30) angeordnet ist.

7. Überlaufschutzvorrichtung nach Anspruch 6, **dadurch gekennzeichnet, dass** das Ende des Isolators (30) eine Erweiterung (32) umfasst, wobei die zweite Elektrode (20) oberhalb der Erweiterung (32) angeordnet ist und der Hohlraum (31) innerhalb der Erweiterung (32) ausgebildet ist, wobei der Abstand zwischen einer äußeren Seitenwand der Erweiterung (32) und der Außenfläche des vorstehenden Teils der ersten Elektrode (10) von der Bodenwand des Hohlraums (31) in der Richtung, die sich zur Öffnung des Hohlraums (31) hin erstreckt, allmählich zunimmt.

8. Überlaufschutzvorrichtung nach Anspruch 7, **dadurch gekennzeichnet, dass** A2 der Winkel ist, der von einer Erzeugenden der äußeren Seitenwand der Erweiterung (32) und der Achse der ersten Elektrode (10) gebildet wird, wobei der Winkel A2 größer als oder gleich 3° und kleiner als oder gleich 80°, bevorzugt größer als oder gleich 10° und kleiner als oder gleich 60° ist.

9. Überlaufschutzvorrichtung nach Anspruch 6, **dadurch gekennzeichnet, dass** die zweite Elektrode (20) eine leitende Lamelle ist, wobei der aus der Bodenwand herausragende vorstehende Teil der ersten Elektrode (10) ein erstes aktives Überlaufschutzelement bildet, wobei der auf der Außenfläche des Isolators (30) angeordnete freiliegende Teil der zweiten Elektrode (20) ein zweites aktives Überlaufschutzelement bildet, wobei D3 ein Abstand zwischen einem freien Ende des ersten aktiven Überlaufschutzelements und einem unteren Ende des zweiten aktiven Überlaufschutzelements ist, das dem Hohlraum (31) in einer Längsrichtung der ersten Elektrode (10) am nächsten angeordnet ist, wobei der Abstand D3 größer als oder gleich 0,5 mm und kleiner als oder gleich 60 mm, bevorzugt größer als oder gleich 2 mm und kleiner als oder gleich 30 mm ist.

10. Überlaufschutzvorrichtung nach Anspruch 9, **dadurch gekennzeichnet, dass** D4 ein Abstand zwischen dem freien Ende des ersten aktiven Überlaufschutzelements und einem oberen Ende des zweiten aktiven Überlaufschutzelements ist, das in Längsrichtung der ersten Elektrode (10) am weitesten von dem Hohlraum (31) entfernt angeordnet ist, wobei der Abstand D4 größer als oder gleich 1,5 mm und kleiner als oder gleich 60 mm, bevorzugt größer als oder gleich 3 mm und kleiner als oder gleich 30 mm ist.

11. Überlaufschutzvorrichtung nach Anspruch 6, **dadurch gekennzeichnet, dass** sie auch eine dritte Elektrode (40) zur Temperaturerfassung umfasst, wobei die dritte Elektrode (40) an der zylindrischen Seitenwand des Isolators (30) oberhalb der zweiten Elektrode (20) angeordnet ist.

12. Überlaufschutzvorrichtung nach Anspruch 11, **dadurch gekennzeichnet, dass** D5 ein Abstand zwischen einem unteren Ende eines an der Außenfläche des Isolators (30) angeordneten freiliegenden Teils der dritten Elektrode (40) und dem unteren Ende des an der Außenfläche des Isolators (30) angeordneten freiliegenden Teils der zweiten Elektrode (20) ist, wobei der Abstand D5 größer als oder gleich 1 mm und kleiner als oder gleich 40 mm, bevorzugt größer als oder gleich 3 mm und kleiner als oder gleich 15 mm ist.

13. Überlaufschutzvorrichtung nach Anspruch 12, **dadurch gekennzeichnet, dass** mehrere in Längsrichtung des Isolators (30) angeordnete und voneinander beabstandete dritte Elektroden (40) vorhanden sind, wobei D6 der Abstand zwischen zwei benachbarten dritten Elektroden (40) ist, wobei der Abstand D6 größer als oder gleich 1 mm und kleiner als oder gleich 40 mm, bevorzugt größer als oder gleich 3 mm und kleiner als oder gleich 25 mm ist.

14. Überlaufschutzvorrichtung nach einem der Ansprüche 1 bis 4, **dadurch gekennzeichnet, dass** die zweite Elektrode (20) vom Isolator (30) beabstandet ist, wobei D7 der Abstand zwischen der ersten Elektrode (10) und der zweiten Elektrode (20) ist, wobei der Abstand D7 größer als oder gleich 2 mm und kleiner als oder gleich 150 mm, bevorzugt größer als oder gleich 5 mm und kleiner als oder gleich 100 mm ist.

15. Kochgerät, das einen mit einem Deckel (60) abgedeckten Hauptkörper (50) und eine an einer Innenseite des Deckels (60) angeordnete Überlaufschutzvorrichtung umfasst, **dadurch gekennzeichnet, dass** die Überlaufschutzvorrichtung einem der Ansprüche 1 bis 14 entspricht.

## Claims

1. Anti-overflow device comprising:
a first electrode (10) and a second electrode (20), spaced apart from each other;
an insulator (30) with a cavity (31) arranged on an outer surface of the insulator (30), the first electrode (10) being installed inside the insulator (30), and comprising a projecting portion protruding from a bottom wall of the cavity (31), **characterised in that**:
the distance between a side wall of the cavity (31) and an outer surface of the projecting portion of the first electrode (10) gradually increases from the bottom wall of the cavity (31) in a direction extending towards an opening of the cavity (31).

2. Anti-overflow device according to claim 1, **characterised in that** D1 is a distance between an intersection between the bottom wall and the side wall of the cavity (31) and the outer surface of the projection portion of the first electrode (10), and A1 is an angle formed by a line generating the side wall of the cavity (31) and an axis of the first electrode (10), the distance D1 being greater than or equal to 0.1mm and less than or equal to 10mm, preferably greater than or equal to 0.7mm and less than or equal to 5mm, the angle A1 being greater than or equal to 3° and less than or equal to 80°, preferably greater than or equal to 10° and less than or equal to 60°.

3. Anti-overflow device according to claim 2, **characterised in that** D2 is a diameter of the opening of the cavity (31), the diameter D2 being greater than or equal to 2mm and less than or equal to 25mm, preferably greater than or equal to 4mm and less than or equal to 10mm.

4. Anti-overflow device according to claim 1, **characterised in that** the projecting portion of the first electrode (10) protruding from the bottom wall protrudes from the opening of the cavity (31).

5. Anti-overflow device according to any one of claims 1 to 4, **characterised in that** the second electrode (20) is arranged on the insulator (30), and comprises at least one stripped portion arranged on the outer surface of the insulator (30).

6. Anti-overflow device according to claim 5, **characterised in that** the cavity (31) is located at an end of the insulator (30), and the second electrode (20) is arranged on a cylindrical side wall of the insulator (30).

7. Anti-overflow device according to claim 6, **characterised in that** the end of the insulator (30) comprises a flare (32), the second electrode (20) being located above the flare (32) and the cavity (31) being formed inside the flare (32), the distance between an outer side wall of the flare (32) and the outer surface of the projection portion of the first electrode (10) gradually increasing from the bottom wall of the cavity (31) in the direction extending to the opening of the cavity (31).

8. Anti-overflow device according to claim 7, **characterised in that** A2 is the angle formed by a line generating the outer side wall of the flare (32) and the axis of the first electrode (10), the angle A2 being greater than or equal to 3° and less than or equal to 80°, preferably greater than or equal to 10° and less than or equal to 60°.

9. Anti-overflow device according to claim 6, **characterised in that** the second electrode (20) is a conductive strip, the projection portion of the first electrode (10) protruding from the bottom wall constituting a first anti-overflow active element, the stripped portion of the second electrode (20) arranged on the outer surface of the insulator (30) constituting a second anti-overflow active element, D3 being a distance between a free end of the first anti-overflow active element and a low end of the second anti-overflow active element located closest to the cavity (31) along a longitudinal direction of the first electrode (10), the distance D3 being greater than or equal to 0.5mm and less than or equal to 60mm, preferably greater than or equal to 2mm and less than or equal to 30mm.

10. Anti-overflow device according to claim 9, **characterised in that** D4 is a distance between the free end of the first anti-overflow active element and a high end of the second anti-overflow active element located farthest from the cavity (31) along the longitudinal direction of the first electrode (10), the distance D4 being greater than or equal to 1.5mm and less than or equal to 60mm, preferably greater than or equal to 3mm and less than or equal to 30mm.

11. Anti-overflow device according to claim 6, **characterised in that** it also comprises a third electrode (40) serving to detect the temperature, the third electrode (40) being arranged on the cylindrical side wall of the insulator (30), above the second electrode (20).

12. Anti-overflow device according to claim 11, **characterised in that** D5 is a distance between a low end of a stripped portion of the third electrode (40) arranged on the outer surface of the insulator (30) and the low end of the stripped portion of the second electrode (20) arranged on the outer surface of the insulator (30), the distance D5 being greater than or equal to 1mm and less than or equal to 40mm, preferably greater than or equal to 3mm and less than or equal to 15mm.

13. Anti-overflow device according to claim 12, **characterised in that** there are several third electrodes (40), disposed in a longitudinal direction of the insulator (30) and spaced apart from each other, D6 being the distance between two adjacent third electrodes (40), the distance D6 being greater than or equal to 1mm and less than or equal to 40mm, preferably greater than or equal to 3mm and less than or equal to 25mm.

14. Anti-overflow device, according to any one of claims 1 to 4, **characterised in that** the second electrode (20) is spaced apart from the insulator (30), D7 being the distance between the first electrode (10) and the second electrode (20), the distance D7 being greater than or equal to 2mm and less than or equal to 150mm, preferably greater than or equal to 5mm and less than or equal to 100mm.

15. Cooking appliance comprising a main body (50) covered by a cover (60) and an anti-overflow device arranged on an inner side of the cover (60), **characterised in that** the anti-overflow device is in accordance with any one of claims 1 to 14.
